# EUROPEAN PATENT SPECIFICATION

(11) **EP 3 578 404 B1**
(45) Date of publication and mention of the grant of the patent: **18.08.2021**
(21) Application number: 19170419.6
(22) Date of filing: 19.04.2019
(51) Int. Cl.: B60K 13/02, B60K 13/06

(54) **SADDLE-RIDING VEHICLE**
SATTELFAHRZEUG
VÉHICULE DE TYPE À ENFOURCHER

(30) Priority: 07.06.2018 JP 2018109285
(43) Date of publication of application: 11.12.2019
(73) Proprietor: Kawasaki Jukogyo Kabushiki Kaisha, Hyogo 650-8670 (JP)
(72) Inventor: AKAKI, Hiroyuki, Hyogo, 650-8670 (JP); ICHI, Satoaki, Hyogo, 650-8670 (JP)
(74) Representative: Porta & Consulenti Associati S.p.A.

(56) References cited:
- EP-A1- 2 206 911
- EP-A1- 2 873 847
- CN-C- 100 500 467
- JP-A- S60 248 438

## Description

### BACKGROUND OF THE INVENTION

### (Field of the Invention)

The present invention relates to a saddle-riding vehicle equipped with an air intake duct for taking air in from front of an engine and then supplying it to an air cleaner.

### (Description of Related Art)

A saddle-riding vehicle such as, for example, a motorcycle, has been well known in which an air intake duct for supplying towards an air cleaner the incoming air forwardly of the engine. (See, for example, the Japanese Patent No. 6078538.) According to the Japanese Patent No. 6078538 referred to above, the air intake duct is disposed on one lateral side of a vehicle body with respect to a vehicle widthwise direction. Accordingly, the air intake duct can be easily provided even in a vehicle of a kind utilizing a pipe frame type body framework.

In the Japanese Patent No. 6078538 referred to above, the air intake duct has an inlet port formed in a front surface of a front cowl and, also, an outlet port provided rearwardly of a cylinder. For this reason, change of the air intake duct in a vertical direction tends to become large, posing a problem associated with a resistance (loss) within an air intake passage.

Documents EP2206911A1, EP2873847A1, JPS60248438A and CN100500467C disclose other saddle-riding vehicles having some of the features of this invention.

### SUMMARY OF THE INVENTION

In view of the foregoing, the present invention has for its object to provide a saddle-riding vehicle of a type capable introducing air efficiently.

In order to accomplish the above described object, a saddle-riding vehicle according to claim 1 is provided. The saddle-riding vehicle according to the present invention includes: a pair of left and right main frames extending rearwardly from a head pipe; a front cowl covering an area forwardly of the head pipe; an air cleaner disposed between the left and right main frames and above an engine; a front fork pivotally supported by the head pipe; and an air intake duct for introducing an incoming wind through an inlet port at a front end thereof and then supplying it to the air cleaner. The air intake duct includes: a duct front portion disposed forwardly of the head pipe and the front fork; a duct intermediate portion extending from the duct front portion in a rearward direction along a vehicle widthwise lateral outer area of the front fork and the main frames; and a duct rear portion curved from the duct intermediate portion in a direction inwardly of a vehicle widthwise direction and terminating in communication with the air cleaner. The inlet port of the air intake duct is positioned on a vehicle widthwise direction center line of the vehicle and confronts an air introducing opening that is open forwardly of the front cowl, and the duct front portion is curved rearwardly from the inlet port at the front end so as to extend towards a vehicle widthwise direction lateral outer side. A portion of an inner wall surface of the duct front portion constitutes an attachment portion with which the air introduced through the inlet port collides to allow a water component to be attached thereto.

According to the foregoing construction devised in accordance with the present invention, the inlet port of the air intake duct is positioned on the vehicle widthwise direction center line and confronts the air introducing opening open forwardly of the front cowl. Since the pressure during the travelling of the motorcycle is high at the vehicle widthwise direction center of the front end of the vehicle, the high pressure air can be supplied into the air intake duct. Also, since the duct intermediate portion is positioned laterally outwardly of the front fork and the main frame, any possible interference with engine peripheral component parts that are disposed on an inner side of the vehicle widthwise direction can be avoided. Also, since the air cleaner is positioned above the engine, the displacement in the vertical direction can be readily made small over the entire length of the air intake duct. Accordingly, the air can be smoothly introduced into the air cleaner. In this way, the high pressure air can be captured and is smoothly introduced into the air cleaner, and therefore, the air can be efficiently introduced into the air cleaner.

Where the displacement in the vertical direction of the air intake duct is small, there is the risk that rain water (water droplets) may be introduced into the air intake duct together with the incoming air. According to the above discussed construction, however, collision of the incoming wind against the attachment portion allows the water droplets, introduced together with the incoming air, to result in adherence to the attachment portion. Accordingly, an undesirable ingression of a water component into the air cleaner can be suppressed. Therefore, there is no need to separately use any partition plate for allowing the water droplets to adhere, and the structure can also be simplified.

In the present invention, the attachment portion has a transverse sectional shape which extends straight in a direction inclined rearward relative to the vehicle widthwise direction. According to this construction, it is easy for the incoming wind, then introduced from front into the air intake duct, to collide with the attachment portion. Therefore, the water droplets can be effectively adhered. The attachment portion is positioned on the vehicle widthwise direction center line.

In the present invention, at a region, on a downstream side of the attachment portion with respect to a flow direction of the air, in the duct front portion, a constricted portion having a flow passage area decreasing gradually may be formed. According to this construction, since thanks to the constricted portion the intake air pressure stabilizes, the stabilized intake air can be supplied to the air cleaner. In such case, a water drain port may be formed in a lower surface of the constricted area. According to this construction, since the water drain port is formed in the lower surface of the constricted portion at which the intake air pressure stabilizes, the water droplets captured by the attachment portion can be effectively drained.

Where the use is made of the constricted portion as discussed above, the constricted portion may be formed by recessing a portion of a wall of the duct front portion inwardly of an air intake passage. According to this construction, the constricted portion can be formed with a simplified structure without the necessity to use any separate and extra member. In such case, a pair of left and right headlamps may be provided, the inlet port of the air intake duct may be positioned above the headlamps and between the left and right headlamps, and the constricted portion may be formed by recessing a part of a front wall of the duct front portion. According to this construction, a portion of the headlamps can be disposed within a space that is left when the front wall is recessed in order to form the constricted portion.

In the present invention, the duct rear portion may be fluid connected with the air cleaner through an opening formed in one of the main frames. According to this construction, there is no need to curve the air intake duct in the vertical direction in order to avoid the interference with the main frames, and therefore, the flow of the air within the air intake duct is rendered to be smooth. In such case, a transverse sectional shape of the duct intermediate portion may have a rectangular shape elongated in the vertical direction, and a transverse sectional shape of an outlet port in the duct rear portion may be round. According to this construction, while avoiding an undesirable increase of the duct intermediate portion in the vehicle widthwise direction, passage through the opening in the main frame can be easily accomplished at the duct rear portion. Also, rendering the transverse sectional shape of the duct rear portion to be round is effective to facilitate connection with the air cleaner.

Where the duct rear portion extends through the opening referred to above, each of the left and right main frames may include: a frame front portion flaring laterally outwardly of the vehicle widthwise direction towards a direction rearwardly from the head pipe, when viewed in a plane; a frame intermediate portion extending rearwardly from the frame front portion; and a frame rear portion extending rearwardly of the frame intermediate portion, the left and right frame intermediate portion of the left and right main frames extending parallel to each other, and the duct rear portion may be fluid connected with the air cleaner after having been passed through the opening, formed in the frame front portion or the frame intermediate portion, in a direction from the lateral outside of the vehicle widthwise direction inside towards an inner side thereof. According to this construction, the intake air duct disposed laterally outside of the vehicle widthwise direction of the main frame can be smoothly curved and then connected fluid with the air cleaner.

In the present invention, a side cowl is further provided to cover a front portion of a vehicle body, and the air intake duct may be covered by the front cowl and the side cowl from outside of the vehicle widthwise direction. According to this construction, there is need to render the air intake duct to be a component subject to design registration, and therefore, the freedom of designing of the air intake duct can be increased. In such case, the air intake duct may be comprised of two component parts including left and right duct halves. According to this construction, a joint area (partitioning line) is formed in upper and lower surfaces of the air intake duct, and therefore, the appearance as viewed by a rider from inside of the vehicle is good.

Any combination of at least two constructions, disclosed in the appended claims and/or the specification and/or the accompanying drawings should be construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is defined by the appended claims.

In the accompanying drawings, like reference numerals are used to denote like parts throughout the several views, and:
Fig. 1 is a side view showing a front portion of a motorcycle, which is one kind of saddle-riding vehicles according to a first preferred embodiment of the present invention;
Fig. 2 is a top plan view showing the front portion of the motorcycle shown in Fig. 1;
Fig. 3 is a side view showing an important portion of the motorcycle shown in Fig. 1;
Fig. 4 is a front view showing the important portion of the motorcycle shown in Fig. 1;
Fig. 5 is a longitudinal sectional view showing a front cowl used in the motorcycle shown in Fig. 1;
Fig. 6 is a horizontal sectional view showing the front portion of the motorcycle shown in Fig. 1;
Fig. 7 is a perspective view showing an air intake duct used in the motorcycle shown in Fig. 1; and
Fig. 8 is a sectional view showing the joint between the air intake duct and an air cleaner.

### DESCRIPTION OF PREFERRED EMBODIMENTS

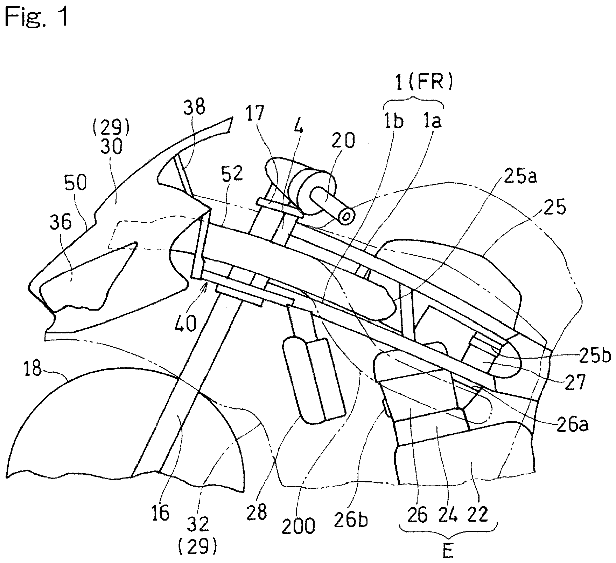

Hereinafter, a preferred embodiment of the present invention will be described in detail with particular reference to the accompanying drawings. Fig. 1 is a side view showing a front portion of a motorcycle, which is a kind of saddle-riding vehicle according to a first preferred embodiment of the present invention. In the specification hereinafter set forth, it is to be noted that the terms "left" and "right" are used to denote opposite positions or directions, respectively, relative to a motorcycle rider or motorist then occupying a motorcycle rider's seat and looking forwards. It is also to be noted that the terms "upstream" and "downstream" are used to denote opposite positions or direction, respectively, relative to the direction of flow of air in an air intake system of the vehicle.

A vehicle framework FR of the motorcycle in the practice of the present invention is formed of a pipe framework in which steel pipe members are welded together. The pipe framework can easily form an inexpensive, robust and lightweight frame structure. A main frame 1 forming a front half of the vehicle framework FR is so formed as to be inclined downwards in a rearward direction from a head pipe 4 defined at a front end thereof. The main frame 1 employed in the practice of the present embodiment includes an upper frame 1a and a lower frame 1b. The upper frame 1a is so inclined as to extend rearwardly downwardly from a top portion of the head pipe 4. On the other hand, the lower frame 1b is so inclined as to extend rearwardly downwardly from a lower portion of the head pipe 4.

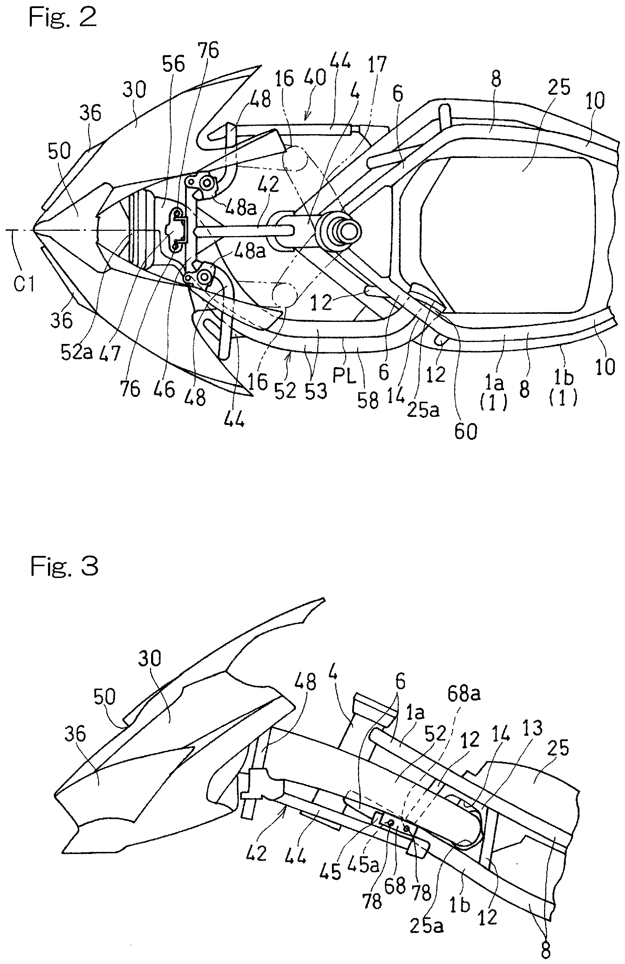

As shown in Fig. 2, the main frame 1 is employed in one pair, a left and right pair. Specifically, the upper frame 1a and the lower frame 1b are employed all in the left and right pairs. The main frame 1 in each of the left and right pairs includes a frame front portion 6 extending rearwardly from the head pipe 4, a frame intermediate portion 8 extending rearwardly from the frame front portion 6, and a frame rear potion 10 positioned rearwardly of the frame intermediate portion 8.

The left and right frame front portions 6, when viewed in plane, extend rearwardly while flaring laterally outwardly in a vehicle widthwise direction. In other words, the spacing between the left and right frame front portions 6 in the vehicle widthwise direction gradually becomes large in a rearward direction. The left and right frame intermediate portions 8 extend rearwardly from the frame front portions 6 while extending parallel to each other in the rearward direction. In other words, the spacing between the left and right frame intermediate portions 8 in the vehicle widthwise direction is substantially fixed. In the practice of the embodiment now under discussion, the frame rear portion 10 extends rearwardly while being inclined laterally inwardly of the vehicle widthwise direction. In other words, the spacing between the left and right frame rear portions 10 gradually becomes small in a direction rearwardly. Therefore, at the frame intermediate portions 8, the spacing between the left and right main frames 1 in the vehicle widthwise direction is maximized in the vehicle widthwise direction.

As shown in Fig. 3, a rear portion of the frame front portion 6 and a front end portion of the frame intermediate portion 8 are provided with respective reinforcement pipes 12 and 12. In the practice of the embodiment now under discussion, the reinforcement pipe 12 is employed two in a fashion juxtaposed in a forward and rearward direction or longitudinal direction of the vehicle body. Each of the reinforcement pipes 12 extends in an upward and downward direction or vertical direction to connect the upper frame 1a and the lower frame 1b together. By the action of a gusset 13 which is connected between the upper frames 1a and the lower frame 1b and the two reinforcement pipes 12 and 12, an opening 14 open in the vehicle widthwise direction is formed. In the practice of the embodiment now under discussion, the opening 14 is defined in the vicinity of a rear end portion of the frame front portion 6, specifically in the vicinity of a joint between the frame front portion 6 and the frame intermediate portion 8.

Left and right pairs of front forks 16 are pivotally supported through a steering shaft (not shown) by the head pipe 4 at the front end of the main frame 1 shown in Fig. 1. A front wheel 18 is supported by a lower end of the front fork 16. To an upper bracket 17 supporting an upper end portion of the front fork 16, a handle bar 20 is fitted. Left and right pair of swing arms (not shown) are supported by rear end lower portions of the respective main frames 1, and a rear wheel (not shown) is supported by those swing arms. An engine E is supported by intermediate lower portions of the main frames 1. By the engine E, the rear wheel is driven.

The engine E employed in the practice of the embodiment now under discussion is a water cooled, four cylinder four cycle engine in which cylinders are juxtaposed in the vehicle widthwise direction. It is, however, to be noted that the engine 4 may be of any type and is not, therefore, limited to the particular type referred to above. The engine E includes: a crankcase 22, which supports a crankshaft (not shown); cylinders 24 protruding upwardly from a front portion of the crankcase 22; and a cylinder head 26 positioned above the cylinder 24. An intake port 26a through which air is introduced is formed in a rear surface of the cylinder head 26. A front surface of the cylinder head 26 is formed with an exhaust port 26b through which exhaust gases are discharged. A radiator 28 is disposed forwardly of the engine E. The radiator 28 is supported by the main frame 1 and is operable to radiate heat from a cooling water for the engine E.

An air cleaner 25 is disposed above the cylinder head 26 of the engine E. The air cleaner 25 is operable to filtrate air being supplied towards the engine E. As shown in Fig. 2, the air cleaner 25, when viewed in a plane, is disposed between the left and right main frames 1 and 1. The air cleaner 25 is supported by the main frames 1 through a bracket (not shown). The air cleaner 25 has a front portion formed with a cleaner inlet port 25a as shown in Fig. 1, and also, a rear portion formed with a cleaner outlet port 25b.

The cleaner outlet port 25b is employed four in number one for each cylinder while being juxtaposed relative to each other in the vehicle widthwise direction. Each of the cleaner outlet ports 25b employed in the practice of the embodiment now under discussion is defined by a funnel which extends through a bottle wall of a casing of the air cleaner 25. A throttle body 27 is connected between the air cleaner outlet port 25b and the corresponding intake port 26a of the engine E.

The motorcycle according to the embodiment now under discussion makes use of a cowling that protects the rider from the wind pressure during the run thereof. The cowling 29 includes a front cowl 30 and left and right pairs of side cowls 32. The front cowl 30 covers an area forwardly of the head pipe 4. The side cowls 32 are positioned rearwardly of the front cowl 30 and covers a front portion of the vehicle body, specifically, the main frames 1, the radiator 28 and the engine E from lateral direction.

A headlamp 36 is mounted on a front surface of the front cowl 30. A meter unit 38 is disposed at a position forwardly of the head pipe 4 and above the front cowl 30. The front cowl 30 and the meter unit 38 are supported by the vehicle framework FR through a meter stay 40.

As shown in Fig. 2, the meter stay 40 includes: a first pipe 42 extending forwardly from the head pipe 4; and left and right second pipes 44 and 44 extending respectively forwardly from the left and right lower frames 1b and 1b. The first pipe 42 and the second pipe 44 are jointed to the head pipe 4 and the lower frame 1b by means of, for example, welding, respectively.

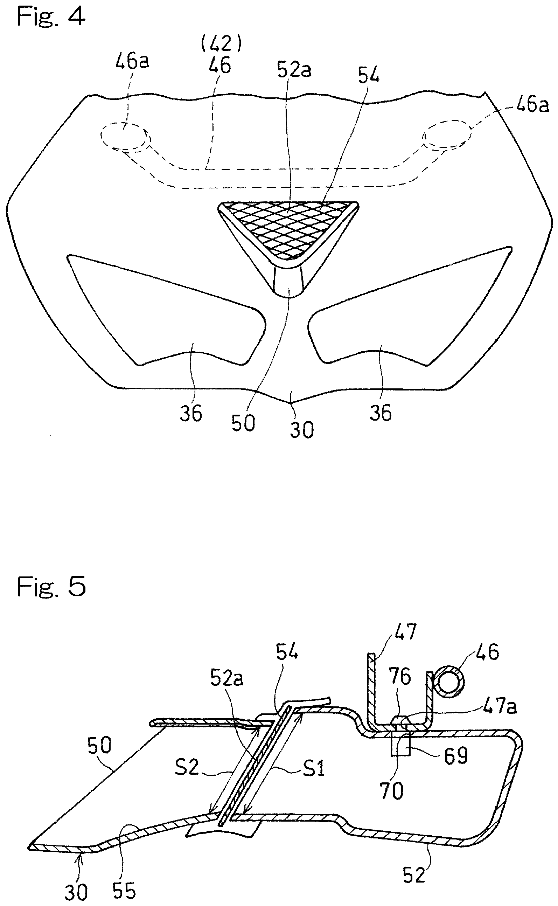

A third pipe 46 extending in the vehicle widthwise direction is jointed to a front end of the first pipe 42. The third pipe 46 has left and right opposite end portions which are curved to extend diagonally upwardly and forwardly, and a cowl fitting portion 46a (Fig. 4) is provided at each of the left and right opposite ends thereof. The front cowl 30 is fixed to the cowl fitting portion 46a by means of bolts (not shown).

Left and right fourth pipes 48 are connected with respective front ends of the left and right second pipes 44. The fourth pipe 48 connects the second pipe 44 and the third pipe 46 together. More specifically, the fourth pipe 48 is, after having extended upwardly from the front end of the second pipe 44, curved in a direction inwardly of the vehicle widthwise direction and is then curved forwardly before connected with the third pipe 46.

A meter fitting portion 48a is provided in the vicinity of the joint between the fourth pipe 48 and the third pipe 46. The meter unit 38 (Fig. 1) is fixed to the meter fitting portion 48a by means of a bolt (not shown). It is, however, to be noted that the structure of the meter stay 40 is not necessarily limited to that shown and described.

As shown in Fig. 3, a first duct fitting piece 45 is provided in the left second pipe 44. The first duct fitting piece 45 is prepared in the form of a metal sheet and jointed to an upper surface of the left second pipe 44. The first duct fitting piece 45 is provided with a screw hole 45a that is oriented outwardly of the vehicle widthwise direction. In the practice of the embodiment now under discussion, the screw hole 45a is formed as a welded nut and is provided two in number while juxtaposed relative to each other in the longitudinal direction of the vehicle body.

As shown in Fig. 2, a second duct fitting piece 47 is provided in the third pipe 46. The second duct fitting piece 47 is prepared in the form of a metal sheet and is jointed to a front surface of the third pipe 46. In other words, the second duct fitting piece 47 is positioned forwardly of the third pipe 46. The second duct fitting piece 47 is provided with a bolt insertion hole 47a (Fig. 5) that is oriented in the vertical direction. The bolt insertion hole 47a is employed two in number while juxtaposed relative in the vehicle widthwise direction to each other.

The front cowl 30 has a front surface formed with an air introducing opening 50 defined therein so as to open forwards. When the motorcycle is running, the incoming wind is introduced, as an intake air for the engine E, through the air introducing opening 50. The air introducing opening 50 is positioned on a vehicle widthwise direction center line C1 of the motorcycle. As shown in Fig. 4, the air introducing opening 50 is positioned above the headlamps 36 and between the left and right headlamps 36 and 36. In the practice of the embodiment now under discussion, the air introducing opening 50, when viewed from front, is in the form of an inverted triangular opening. It is, however, to be noted that the shape of the air introducing opening 50 may not be limited to that described above.

As shown in Fig. 2, the use is made of an air intake duct 52 for communicating the air introducing opening 50 with the air cleaner 25. This air intake duct 52 has an inlet port 52a at a front end thereof, which port 52a is positioned on the vehicle widthwise direction C1 of the motorcycle and confronts the air introducing port 50. In other words, the air intake duct 52 takes the incoming wind in through the inlet port 52a and then supplies the incoming air to the air cleaner 25. In the practice of the embodiment now under discussion, since the air cleaner 25 is disposed upwardly of the cylinder head 26, any possible change of the air intake duct 52 in the vertical direction, that is, the amount of change in shape is small as compared with that exhibited in the case where the air cleaner is positioned rearwardly of the cylinder 24 as shown by the double dotted line in Fig. 1.

As shown in Fig. 4, the inlet port 52a of the air intake duct 52, which is rearwardly of the air introducing opening 50, is also positioned above the headlamps 36 and between the left and right headlamps 36 and 36. The inlet port 52a of the air intake duct 52 represents an inverted triangular shape when viewed in a front. It is, however, to be noted that the shape of the inlet port 52a may not necessarily be limited to that shown and described. A screen 54 is mounted on the inlet port 52a of the air intake duct 52. The screen 54 is used to avoid any possible ingress of foreign matter into the air intake duct 52.

The front cowl 30 is, as shown in Fig. 5, formed with an air introducing passage 55 which communicates between the air introducing opening 50 and the inlet port 52a of the air intake duct 52. The air introducing passage 55 has a flow passage area that is progressively decreasing in the rearward direction from the air introducing opening 50. Accordingly, during the flow through the air introducing passage 55, the flow velocity of air become high. Also, the opening area (flow passage area) S1 of the inlet port 52a of the air intake duct 52 is greater than the flow passage area S2 at a downstream end (rear end) of the air introducing passage 55 (S1 > S2). Accordingly, the air introduced from the air introducing passage 55 can be sufficiently taken into the air intake duct 52.

As shown in Fig. 2, the air intake duct 52 extends rearwardly of the front fork 16 and laterally outwardly of the vehicle widthwise direction of the main frame 1. Also, as shown in Fig. 1, the air intake duct 52, when viewed from lateral, extends beneath the handle bar 20 and above the radiator 28. In the practice of the embodiment now under discussion, the air intake duct 52 is covered from lateral outside by the front cowl 30 and the side cowls 32.

The air intake duct 52, employed in the practice of the embodiment now under discussion, is made of a resinous material such as, for example, polyethylene (PE) and is formed by jointing two components, that is, left and right duct halves 53 and 53 together. Accordingly, the line of division PL of the air intake duct 52 is defined by upper and lower surfaces of the air intake duct 52 shown in Fig. 2. It is, however, to be noted that material for and a method of making the air intake duct 52 may not be necessarily limited to those shown and described.

The air intake duct 52 referred to above includes a duct front portion 56, a duct intermediate portion 58 and a duct rear portion 60. The duct front portion 56 is disposed forwardly of the head pipe 4 and the front fork 16. The duct intermediate portion 58 extends rearwardly from the duct front portion 56 along the front fork 16 and the main frame 1 on a lateral outside of the vehicle widthwise direction. The duct rear portion 60 is fluid connected with the air cleaner 25 after having been curved from the duct intermediate portion 58 towards an inner side of the vehicle widthwise direction. Thus, the air intake duct 52 is connected from front with a front portion of the air cleaner 25. It is to be noted that the wording "being connected from front" referred to above and hereinafter is intended to mean the connection taking place in a forwardly slantwise direction relative to the vehicle widthwise direction.

The duct front portion 56 is curved in a direction rearwardly from the inlet port 52a at the front end towards one lateral side of the vehicle widthwise direction. Specifically, the inlet port 52 at the front end of the duct front portion 56 is positioned forwardly of the head pipe 4 with its axis coinciding with the vehicle widthwise center line C1 when viewed in a plane. The duct front portion 56 is curved from the inlet port 52a in a direction rearwardly leftwards and extends forwardly of the front fork 16 at a location rearwardly of the head lamp 36. The duct front portion 56 is curved to the positon of the lateral outer side (left side) of the vehicle widthwise direction. Specifically, the duct front portion 56 is curved to the position of the laterally outer side of the vehicle widthwise direction rather than a region in which the front fork 16 pivots.

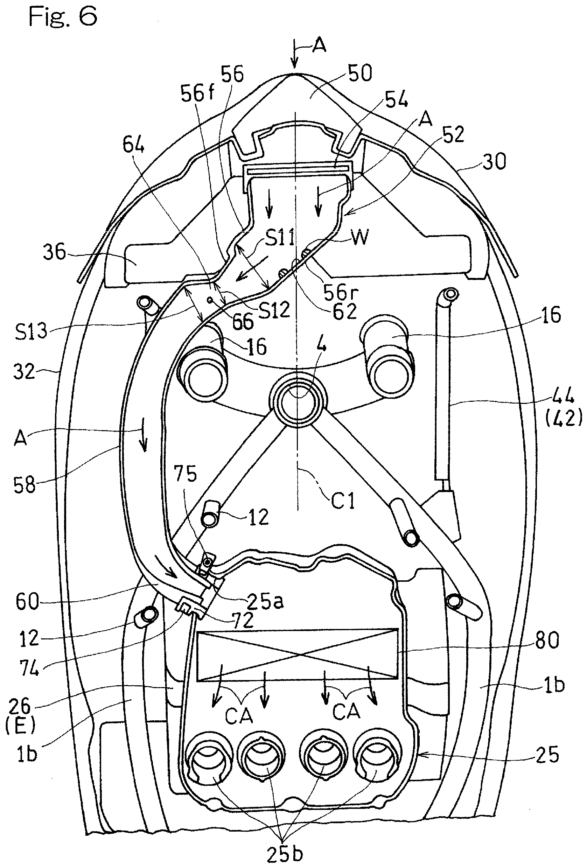

A portion of the inner wall surface of the duct front portion 56 shown in Fig. 6 constitutes an attachment portion 62. The air introduced from the inlet port 52a collides against the attachment portion 62, and hence, a water component in the air is attached to the attachment portion 62. Specifically, a portion of the inner wall surface (a portion of an inner surface of a rear wall 56r) represents such a sectional shape that the portion of the inner wall surface may extend straight rearwardly while having been inclined towards the lateral outer side of the vehicle widthwise direction. That portion, which extends straight in this way, constitutes the attachment portion 62. The attachment portion 62 confronts the inlet port 52a in the longitudinal direction of the vehicle body. In other words, the dimensions in the vehicle widthwise direction of the attachment portion 62 and the dimension of the inlet port 52a in the vertical direction are substantially equal to each other.

On a downstream side of the attachment portion 62 in the duct front portion 56, a constricted portion 64 having its passage area gradually decreasing is formed. In the practice of the embodiment now under discussion, a portion of the duct front portion 56 is inserted into, that is, advanced into the inside of an air passage to thereby form the constricted portion 64. Specifically, the constricted portion 64 is formed by recessing a front wall 56f of the duct front portion 56 in a direction rearwardly. Within a space defined when the front wall 56f is recessed, a portion of the headlamp 36 is disposed.

The passage area of the duct front portion 56 on an upstream side of the constricted portion 64 is expressed by S11, the passage area of the constricted portion 64 is expressed by S12, and the passage area of the duct front portion 56 on a downstream side of the constricted portion 64 is expressed by S13. In the practice of the embodiment now under discussion, the passage area S12 of the constricted area 64 is so selected as to fall within the range of 0.6 × S11 to 0.75 × S11. The passage area S13 on the downstream of the constricted portion 64 is so selected as to be equal to 0.8 × S11. It is, however, to be noted that the specific relationship of those passage areas S11 to S13 may not be necessarily limited to that discussed above. The constricted portion 64 of the duct front portion 56 has a lower surface formed with a drain port 66 extending completely through a bottom wall of the duct front portion 56.

The duct intermediate portion 58 extends straight rearwardly towards the lateral outer side (leftward side) of the front fork 16 and the main frame 1. In this duct intermediate portion 58, the passage area is gradually narrowed towards the downstream side (rearwardly). Accordingly, the flow velocity of the air gradually increases towards the downstream side, and therefore, the air flows efficiently into the air cleaner 25.

The duct rear portion 60 is curved from a rear end of the duct intermediate portion 58 in a direction inwardly of the vehicle widthwise direction and is then fluid connected with the air cleaner 25. In the practice of the embodiment now under discussion, the duct rear portion 60 is fluid connected with the air cleaner 25 after having passed inwardly from the lateral outer side of the vehicle widthwise direction through the opening 14, which is formed in the gusset 13 of the main frame 1 shown in Fig. 3.

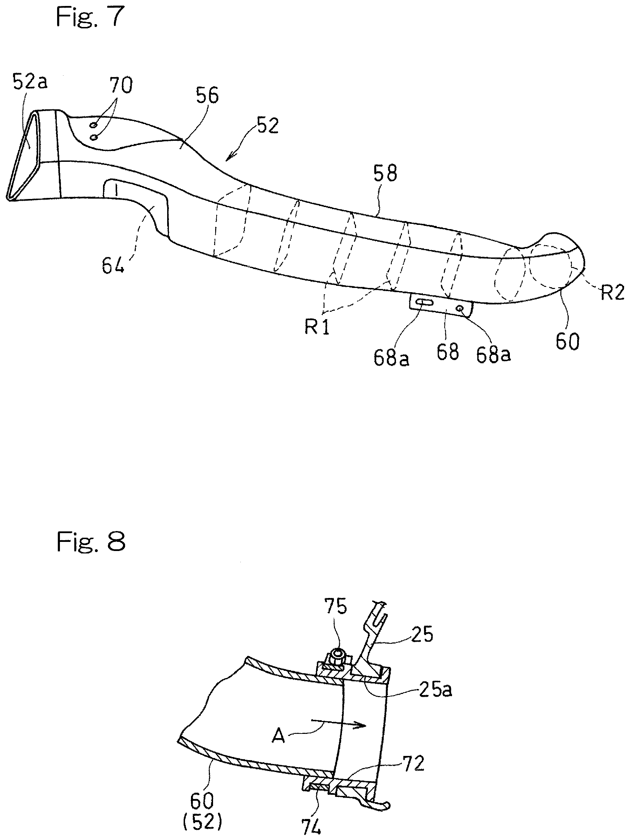

As shown in Fig. 7, the transverse sectional area of the duct intermediate portion 58 is represented by a rectangular shape R1, that I is elongated in the vertical direction, and the transverse sectional area of the outlet of the duct rear portion 60 is represented by a round shape R2. If required, a drain port may be formed in a bottom surface of the duct intermediate portion 58 and/or the duct rear portion 50.

In a lower surface of the duct intermediate portion 58 of the air intake duct 52, a first support portion 68 is provided. The first support portion 68 protrudes downwardly from the lower surface of the duct intermediate portion 58. The first support portion 68 is formed with a bolt insertion hole 68a that is oriented in the vehicle widthwise direction. The bolt insertion hole 68a is employed two in number while juxtaposed relative to each other in the longitudinal direction of the vehicle body. The duct front portion 56 of the air intake duct 52 has an upper surface formed with a fitting hole 70 that is oriented in the vertical direction. The fitting hole 70 is constituted in the form of a throughhole that extends through in an upper wall of the duct front portion 56 and is employed two in number while juxtaposed in the vehicle widthwise direction.

Hereinafter, a support structure for the air intake duct 52 according to the present embodiment will now be discussed. The duct rear portion 60 of the air intake duct 52 is fluid connected with the cleaner inlet port 25a of the air cleaner 25 after having passed through the opening 14 in the main frame 1 shown in Fig. 3. More specifically, as shown in Fig. 8, a cylindrical connecting member 72 is mounted in the opening of the cleaner inlet port 25a, and the duct rear portion 60 is inserted in an inner peripheral surface of the connecting member 72. In this condition, the duct rear portion 60 and the connecting member 72 are held / fixed from an outer periphery by a clamp 74 of any known construction. Removal and mounting of the clamp 74 is carried out by means of a fastening member 75 such as, for example, a threaded body or screw. By so doing, the duct rear portion 60 is supported by the vehicle framework FR, as shown in Fig. 2, through the air cleaner 25.

The duct front portion 56 and the duct intermediate portion 58 in the air intake duct 52 are fixed to the vehicle framework FR through the meter stay 40. More specifically, the duct front portion 56 is fitted to the second duct fitting piece 47 of the meter stay 40 by means of the bolt 76. As shown in Fig. 5, a welding nut 69 is mounted in the fitting hole 70 in the duct front portion 56. The bolt 76 is inserted from above into the bolt insertion hole 47a in the second duct fitting hole 47 and is fastened by the welding nut 69. Accordingly, the duct front portion 56 is fixed to the vehicle framework FR through the meter stay 40.

Also, as shown in Fig. 3, the first support portion 68 of the duct intermediate portion 58 is fitted to the first duct fitting piece 45 of the meter stay 40 by means of a bolt 78. The bolt 76 is inserted in the bolt insertion hole 68a of the first support portion 68 in the duct intermediate portion 56 from the outer lateral side (left side) of the vehicle widthwise direction, and is then screwed into the screw hole 45a of the first piece 45. Accordingly, the duct intermediate portion 58 is fixed to the vehicle framework FR through the meter stay 40. In this way, the air intake duct 52 is supported by the vehicle framework FR.

The flow of the intake air in the motorcycle according to the present embodiment will now be described. When the motorcycle is travelling, the incoming wind A shown in Fig. 6 is introduced from the air introducing opening 50 into the air intake duct 52. At this time, rain water (water droplets W) introduced into the air intake duct 52 together with air collides against and then adheres to the attachment portion 62. The water droplets W adhering to the attachment portion 62 are discharged to the outside of the air intake duct 52 through the drain port 66 on the downstream side thereof.

The air A introduced into the air intake duct 52 is guided towards the lateral outer side (left side) of the vehicle widthwise direction and then flows across the constricted portion 64. The air A so flowing through the constricting portion 64 subsequently flows in the rear direction towards the lateral outer side of the main frame 1. At this time, since the passage area is gradually decreasing towards the downstream side, the flow velocity increases gradually. Also, the air A is guided towards the inner side of the vehicle widthwise direction and is subsequently introduced into the air cleaner 25.

The air A introduced into the air cleaner 25 is filtered through an element 80 within the interior of the air cleaner 25 to eventually provide a clean air CA. This clean air CA is supplied from the cleaner outlet port 25b to the engine E through the throttle body 27 shown in Fig. 1.

According to the above described construction, as shown in Fig. 2, the inlet port 52a of the air intake duct 52 is positioned on the vehicle widthwise direction center line C1 of the motorcycle and confronts the air introducing opening 50 that is defined at the front cowl 30 to open towards the front. Since during the travelling of the motorcycle the vehicle widthwise direction center C1 at the front end of the motorcycle exhibits a high air pressure, the high pressure air can be introduced into the air intake duct 52.

Although a motorcycle of a type in which a large sized head block integral with the head pipe 4 is used with the air intake passage being defined within this head block is available, the vehicle framework FR employed in the practice of the embodiment hereinabove discussed is made of steel material, and therefore, the use of this type of head block may result in increase of the weight. However, according to the above described construction, the duct intermediate portion 58 extends rearwardly of the front fork 16 and the main frame 1 on the outer side of the vehicle widthwise direction, and therefore, the air intake duct 52 can be easily mounted on the motorcycle of the steel pipe framework type.

As shown in Fig. 1, since the air cleaner 25 is disposed above the cylinder head 26, as compared with the case in which it (duct 200 indicated by the double dotted line) is disposed rearwardly of the cylinder 24, the displacement in the vertical direction can be easily reduced over the entire length of the air intake duct 52. In addition, the air is introduced into the air cleaner 25 from front, not from the vehicle widthwise direction of the air cleaner 25. Accordingly, the air can be smoothly introduced into the air cleaner 25. Thus, the high pressure air is taken into the air intake duct 52 and is smoothly introduced into the air cleaner 25, and therefore, the air can be introduced into the air cleaner 25 with high efficiency.

Where the change of the air intake duct 52 in the vertical direction is small, there is the risk that the rain water (water droplets W) introduced into the air intake duct 52 together with the incoming wind A may be introduced into the air cleaner 25. However, according to the previously described construction, collision of the incoming wind A against the attachment portion 62 shown in Fig. 6 allows the water droplets W, then introduced together with the incoming air A, to adhere to the attachment portion 62. Accordingly, any undesirable ingress of water into the air cleaner 25 can be suppressed. Therefore, there is no need to use any partition plate for the adherence of the water, and the structure is hence simplified.

Since the attachment portion 62 is so designed as to have such a transverse sectional shape in which the attachment portion 62 extends straight in the rear direction while having been inclined in the vehicle widthwise direction, collision of the incoming wind A, introduced from front into the air intake duct 52, against the attachment portion 62 can be facilitated. Therefore, the water droplets W can be caused effectively to adhere.

On the downstream side of the attachment portion 62 in the duct front portion 56, the constricted portion 64 having the passage area gradually decreasing is formed. Since the intake air pressure is stabilized in the presence of the constricted portion 64, the stabilized intake air can be supplied to the air cleaner 25. Also, the water drain port 66 is formed in the lower surface of the constricted area 64, in which the intake air pressure is stabilized. Since the water drain port 66 is formed in the lower surface of the constricted portion 64, the water droplets W captured by the attachment portion 62 can be effectively drained through the water drain port 66.

The constricted portion 64 is formed by allowing a portion of the front wall 56f of the duct front portion 56 in the air intake duct 52 to be recessed. Accordingly, with no need to use any extra member, the constricted portion 64 can be formed with simple structure. Also, a portion of the headlamp 36 can be disposed in the space left by recessing the front wall 56f in order to form the constricted portion 64.

The duct rear portion 60 shown in Fig. 3 is fluid connected with the air cleaner 25 through the opening 14 formed in the main frame 1. Accordingly, there is no need to curve the air intake duct 52 in the vertical direction in order to avoid any possible interference with the main frame 1, and therefore, the flow of the air within the air intake duct 52 can be facilitated. Also, the opening 14 is formed by the upper frame 1a, the lower frame 1b and the two reinforcement pipes 12 and 12. Accordingly, there is no need to use any member dedicated to define the opening 14, and therefore, the structure can also be simplified.

The opening 14 is formed in the frame front portion 6, more specifically in the vicinity of the boundary between the frame front portion 6 and the frame intermediate portion 8. Accordingly, the air intake duct 52 can be prevented from protruding considerably beyond the frame intermediate portion 8 in the vehicle widthwise direction. Accordingly, it is possible to suppress any undesirable increase of the vehicle widthwise dimension of the motorcycle. Also, the frame front portion 6 flaring in the vehicle widthwise direction towards the rear can be so designed as to permit the duct rear portion 60, which is curved inwardly of the vehicle widthwise direction towards the rear. Accordingly, the air intake duct 52 disposed on the outer side of the vehicle widthwise direction of the main frame 1 can be fluid connected with the air cleaner 25 while having been smoothly curved.

The transverse sectional shape of the duct intermediate portion 58 shown in Fig. 7 is rectangular elongated in the vertical direction, and the transverse sectional shape of the outlet in the duct rear portion 60 is round. Accordingly, in the duct intermediate portion 58 which extends on the outer side of the main frame 1 in the vehicle widthwise direction, an undesirable increase in size in the vehicle widthwise direction can be avoided. Also, in the duct intermediate portion 58, rendering the transverse sectional shape to be round makes it possible to pass through the opening 14. Also, rendering the transverse sectional shape of the outlet in the duct rear portion 60 to be round allows the duct rear portion 60 to be easily fluid connected with the air cleaner 25.

The air intake duct 52 is covered from lateral outside by the front cowl 30 and the side cowl 32 as shown in Fig. 1. Accordingly, there is no need to render the air intake duct 52 to be a component subject to design registration, and therefore, the freedom of designing of the air intake duct 52 can be increased.

The air intake duct 52 is comprised of two component parts including the left and right duct halves 53 and 53, and therefore, a joint area PL shown in Fig. 2 is formed in upper and lower surfaces of the air intake duct 52. Accordingly, since the joint area PL is invisible with the rider's eyes from an inner side of the motorcycle, the appearance is good.

In describing the foregoing preferred embodiment, the air intake duct 52 has been shown and described as disposed on the left side of the vehicle body, it may be disposed on the right side thereof. Also, the opening 14 may be provided in the frame intermediate portion 8, not in the frame front portion 6. Yet, the opening 14 in the main frame 1 may not be necessary and may therefore be dispensed with. In such case, the air intake duct 52 is fluid connected with the air cleaner 25 after having passed above or beneath the main frame 1.

Such changes and modifications are unless they depart from the scope of the claims annexed hereto, to be construed as included therein.

### Reference Numerals

- 1: Main frame
- 4: Head pipe
- 6: Frame front portion
- 8: Frame intermediate portion
- 10: Frame rear portion
- 14: Opening
- 16: Front fork
- 25: Air cleaner
- 30: Front cowl
- 32: Side cowl
- 36: Headlamp
- 50: Air introducing opening
- 52: Air intake duct
- 53: Duct half body
- 56: Duct front portion
- 58: Duct intermediate portion
- 60: Duct rear portion
- 62: Attachment portion
- 64: Constricted portion
- 66: Drain port
- C1: Vehicle widthwise direction center line of the vehicle
- E: Engine

## Claims

1. A saddle-riding vehicle which comprises:
a pair of left and right main frames (1), with respect to a vehicle traveling direction, extending rearwardly from a head pipe (4) in the vehicle traveling direction;
a front cowl (30) covering an area forwardly of the head pipe (4), with respect to the vehicle traveling direction;
an air cleaner (25) disposed between the left and right main frames (1) and above an engine (E);
a front fork (16) pivotally supported by the head pipe (4), and;
an air intake duct (52) configured to introduce an incoming wind (A) through an inlet port (52a) at a front end thereof and to then supply it to the air cleaner (25), wherein
the air intake duct (52) includes: a duct front portion (56) disposed forwardly of the head pipe (4), with respect to the vehicle traveling direction, and the front fork (16); a duct intermediate portion (58) extending from the duct front portion (56) in a rearward direction, with respect to the vehicle traveling direction, along a vehicle widthwise lateral outer area of the front fork (16) and the main frames (1); and a duct rear portion (60) curved from the duct intermediate portion (56) in a direction inwardly of a vehicle widthwise direction and terminating in communication with the air cleaner (25),
the inlet port (52a) of the air intake duct (52) confronts an air introducing opening (50) that is open forwardly of the front cowl (30), with respect to the vehicle traveling direction,
the duct front portion (56) is curved rearwardly, with respect to the vehicle traveling direction, from the inlet port (52a) at the front end so as to extend towards a vehicle widthwise direction lateral outer side,
a portion of an inner wall surface of the duct front portion (56) constitutes an attachment portion (62) with which the air introduced through the inlet port (52a) collides to allow a water component to be attached thereto,
**characterized in that** the inlet port (52a) of the air intake duct (52) is positioned on a vehicle widthwise direction center line (C1) of the vehicle,
the attachment portion (62) has a transverse sectional shape which extends straight in a direction inclined rearward relative to the vehicle widthwise direction, and
the attachment portion (62) is positioned on the vehicle widthwise direction center line (C1).

2. The saddle-riding vehicle as claimed in claim 1, wherein at a region, on a downstream side of the attachment portion (62) with respect to a flow direction of the air, in the duct front portion (56), a constricted portion (64) having a flow passage area decreasing gradually is formed.

3. The saddle-riding vehicle as claimed in claim 2, wherein the constricted portion (64) has a lower surface formed with a water drain port (66).

4. The saddle-riding vehicle as claimed in claim 2 or 3, wherein a portion of a wall of the duct front portion (56) is recessed inwardly of an air intake passage to thereby form the constricted portion (64).

5. The saddle-riding vehicle as claimed in claim 4, which further comprises a pair of left and right headlamps (36), with respect to the vehicle traveling direction, wherein
the inlet port (52a) of the air intake duct (52) is positioned above the headlamps (36) and between the left and right headlamps (36), and
a front wall (36f) of the duct front portion (56) has a part recessed to form the constricted portion (64).

6. The saddle-riding vehicle as clamed in any one of claims 1 to 5, wherein the duct rear portion (60) is fluid connected with the air cleaner (25) through an opening (14) defined in one of the main frames (1).

7. The saddle-riding vehicle as claimed in claim 6, wherein the duct intermediate portion (56) has a transverse sectional shape that is rectangular elongated in a vertical direction, and an outlet port (25b) in the duct rear portion (60) has a transverse sectional shape that is round.

8. The saddle-riding vehicle as claimed in claim 6 or 7, wherein
each of the left and right main frames (1) comprises: a frame front portion (6) which, when viewed in a plane, flares laterally outwardly of the vehicle widthwise direction towards a direction rearwardly, with respect to the vehicle traveling direction, from the head pipe (4); a frame intermediate portion (8) extending in a direction rearwardly, with respect to the vehicle traveling direction, from the frame front portion (6) and a frame rear portion (10) positioned rearwardly, with respect to the vehicle traveling direction, of the frame intermediate portion (8), the left and right frame intermediate portions (8) of the left and right main frames (1) extending parallel to each other, and
the duct rear portion (60) in one of the main frames (1) is fluid connected with the air cleaner (25) after having passed through the opening (14), formed in the frame front portion (6) or the frame intermediate portion (8), in a direction from the lateral outside of the vehicle widthwise direction towards an inner side thereof.

9. The saddle-riding vehicle as claimed in any one of claims 1 to 8, further comprising a side cowl (32) configured to cover a front portion of a vehicle body from lateral, wherein
the air intake duct (52) is covered by the front cowl (30) and the side cowls (32) from outside of the vehicle widthwise direction.

10. The saddle-riding vehicle as claimed in claim 9, wherein the air intake duct (52) is of a two component structure that is split into left and right duct halves (53), with respect to the vehicle traveling direction.

## Patentansprüche

1. Sattelfahrzeug, das Folgendes umfasst:
ein Paar linke und rechte Hauptrahmen (1), in Bezug auf eine Fahrzeugfahrtrichtung, die sich rückwärts aus einem Kopfrohr (4) in Fahrzeugfahrtrichtung erstrecken;
eine Frontverkleidung (30), die einen Bereich vorwärts von dem Kopfrohr (4), in Bezug auf die Fahrzeugfahrtrichtung, bedeckt;
einen Luftfilter (25), der zwischen dem linken und dem rechten Hauptrahmen (1) und über einem Motor (E) angeordnet ist;
eine Vordergabel (16), die von dem Kopfrohr (4) schwenkbar getragen wird, und;
einen Luftansaugkanal (52), der ausgebildet ist, um eine einströmende Luft (A) durch eine Einlassöffnung (52a) an einem vorderen Ende davon einzuführen und diese anschließend dem Luftfilter (25) zuzuführen, wobei der Luftansaugkanal (52) Folgendes einschließt: einen vorderen Kanalabschnitt (56), der vorwärts von dem Kopfrohr (4), in Bezug auf die Fahrzeugfahrtrichtung, und der Vordergabel (16) angeordnet ist; einen Kanalzwischenabschnitt (58), der sich von dem vorderen Kanalabschnitt (56) in eine Rückwärtsrichtung, in Bezug auf die Fahrzeugfahrtrichtung, entlang eines fahrzeugbreiten seitlichen Außenbereichs der Vordergabel (16) und des Hauptrahmens (1) erstreckt; und einen hinteren Kanalabschnitt (60), der von dem Kanalzwischenabschnitt (56) in eine Einwärtsrichtung von einer Fahrzeugbreitenrichtung gekrümmt ist und in Verbindung mit dem Luftfilter (25) endet,
die Einlassöffnung (52a) des Luftansaugkanals (52) einer Lufteinführöffnung (50) gegenübersteht, die vorwärts von der Frontverkleidung (30), in Bezug auf die Fahrzeugfahrtrichtung, offen ist,
der vordere Kanalabschnitt (56) rückwärts, in Bezug auf die Fahrzeugfahrtrichtung, von der Einlassöffnung (52a) an dem vorderen Ende gekrümmt ist, um sich zu einem seitlichen Außenbereich in Fahrzeugbreitenrichtung zu erstrecken,
ein Abschnitt einer inneren Wandoberfläche des vorderen Kanalabschnitts (56) einen Befestigungsabschnitt (62) darstellt, mit dem die durch die Einlassöffnung (52a) eingeführte Luft kollidiert, um es einer Wasserkomponente zu erlauben, daran befestigt zu werden,
**dadurch gekennzeichnet, dass** die Einlassöffnung (52a) des Luftansaugkanals (52) auf einer Mittellinie (C1) des Fahrzeugs in Fahrzeugbreitenrichtung positioniert ist,
der Befestigungsabschnitt (62) eine Querschnittsform aufweist, die sich geradlinig in eine rückwärts in Bezug auf die Fahrzeugbreitenrichtung geneigte Richtung erstreckt, und
der Befestigungsabschnitt (62) auf der Mittellinie (C1) in Fahrzeugbreitenrichtung positioniert ist.

2. Sattelfahrzeug nach Anspruch 1, wobei in einem Bereich, auf einer stromabwärtigen Seite des Befestigungsabschnitts (62), in Bezug auf eine Strömungsrichtung der Luft, in dem vorderen Kanalabschnitt (56) ein verengter Abschnitt (64) gebildet ist, der einen allmählich abnehmenden Strömungsdurchgangsbereich aufweist.

3. Sattelfahrzeug nach Anspruch 2, wobei der verengte Abschnitt (64) eine untere Oberfläche aufweist, die mit einer Wasserablassöffnung (66) gebildet ist.

4. Sattelfahrzeug nach Anspruch 2 oder 3, wobei ein Abschnitt einer Wand des vorderen Kanalabschnitts (56) einwärts von einem Ansaugluftdurchgang zurückgesetzt ist, um dadurch den verengten Abschnitt (64) zu bilden.

5. Sattelfahrzeug nach Anspruch 4, welches ferner ein Paar linker und rechter Scheinwerfer (36), in Bezug auf die Fahrzeugfahrtrichtung, umfasst, wobei
die Einlassöffnung (52a) des Luftansaugkanals (52) über den Scheinwerfern (36) und zwischen den rechten und linken Scheinwerfern (36) positioniert ist und
eine vordere Wand (36f) des vorderen Kanalabschnitts (56) einen zurückgesetzten Teil aufweist, um den verengten Abschnitt (64) zu bilden.

6. Sattelfahrzeug nach einem der Ansprüche 1 bis 5, wobei der hintere Kanalabschnitt (60) mit dem Luftfilter (25) durch eine Öffnung (14) fluidisch verbunden ist, die auf einem der Hauptrahmen (1) definiert ist.

7. Sattelfahrzeug nach Anspruch 6, wobei der Kanalzwischenabschnitt (56) eine Querschnittsform aufweist, die in eine vertikale Richtung rechteckig länglich ist, und eine Auslassöffnung (25b) in dem hinteren Kanalabschnitt (60) eine runde Querschnittsform aufweist.

8. Sattelfahrzeug nach Anspruch 6 oder 7, wobei
jeder der rechten und linken Hauptrahmen (1) Folgendes umfasst: einen vorderen Rahmenabschnitt (6), der bei Betrachtung in einer Ebene, sich seitlich auswärts von der Fahrzeugbreitenrichtung in eine rückwärtige Richtung, in Bezug auf die Fahrzeugfahrtrichtung, von dem Kopfrohr (4) erweitert; einen Rahmenzwischenabschnitt (8), der sich in eine Richtung rückwärts, in Bezug auf die Fahrzeugfahrtrichtung, aus dem vorderen Rahmenabschnitt (6) und einem hinteren Rahmenabschnitt (10) erstreckt, der, in Bezug auf die Fahrzeugfahrtrichtung, rückwärts von dem Rahmenzwischenabschnitt (8) positioniert ist, wobei sich der linke und der rechte Rahmenabschnitt (8) des linken und des rechten Hauptrahmens (1) parallel zueinander erstrecken und
der hintere Kanalabschnitt (60) in einem der Hauptrahmen (1) mit dem Luftfilter (25) fluidisch verbunden ist, nachdem er durch die in dem vorderen Rahmenabschnitt (6) oder dem Rahmenzwischenabschnitt (8) gebildete Öffnung (14) in eine Richtung von der seitlichen Außenseite der Fahrzeugbreitenrichtung zu einer Innenseite davon geführt wurde.

9. Sattelfahrzeug nach einem der Ansprüche 1 bis 8, ferner umfassend eine Seitenverkleidung (32), die ausgebildet ist, um einen vorderen Abschnitt einer Fahrzeugkarosserie seitlich zu bedecken, wobei
der Luftansaugkanal (52) von der vorderen Verkleidung (30) bedeckt ist und die seitlichen Verkleidungen (32) von außerhalb der Fahrzeugbreitenrichtung.

10. Sattelfahrzeug nach Anspruch 9, wobei der Luftansaugkanal (52) von einer Zwei-Komponenten-Struktur ist, die in linke und rechte Kanalhälften (53), in Bezug auf die Fahrzeugfahrtrichtung, geteilt ist.

## Revendications

1. Véhicule à selle qui comprend :
une paire de châssis principaux gauche et droit (1), par rapport à une direction de déplacement du véhicule, s'étendant vers l'arrière à partir d'une tubulure de refoulement (4) dans la direction de déplacement du véhicule ;
un capot avant (30) recouvrant une zone vers l'avant de la tubulure de refoulement (4), par rapport à la direction de déplacement du véhicule ;
un filtre à air (25) disposé entre les châssis principaux gauche et droit (1) et au-dessus d'un moteur (E) ;
une chape avant (16) supportée de manière pivotante par la tubulure de refoulement (4), et ;
un conduit d'admission d'air (52) configuré pour introduire un vent entrant (A) à travers un orifice d'admission (52a) au niveau d'une extrémité avant de celui-ci et pour ensuite fournir celui-ci au filtre à air (25), où le conduit d'admission d'air (52) comprend : une partie avant de conduit (56) disposée vers l'avant de la tubulure de refoulement (4), par rapport à la direction de déplacement du véhicule, et la chape avant (16) ; une partie intermédiaire de conduit (58) s'étendant de ladite partie avant de conduit (56) dans une direction vers l'arrière, par rapport à la direction de déplacement du véhicule, le long d'une zone extérieure latérale transversale du véhicule de la chape avant (16) et les châssis principaux (1); et une partie arrière de conduit (60) courbée de ladite partie intermédiaire de conduit (56) dans une direction vers l'intérieur dans le sens de la largeur du véhicule et terminant en communication avec le filtre à air (25),
l'orifice d'admission (52a) du conduit d'admission d'air (52) fait face à une ouverture d'introduction d'air (50) qui est ouverte vers l'avant du capot avant (30), par rapport à la direction de déplacement du véhicule,
la partie avant de conduit (56) est courbée vers l'arrière, par rapport à la direction de déplacement du véhicule, de l'orifice d'admission (52a) au niveau de l'extrémité avant de manière à s'étendre vers un côté extérieur latéral dans le sens de la largeur du véhicule,
une partie d'une surface de paroi intérieure de la partie avant de conduit (56) constitue une partie de fixation (62) avec laquelle l'air introduit par l'orifice d'admission (52a) entre en collision pour permettre à un composant aqueux d'être fixé à celle-ci,
**caractérisé en ce que** l'orifice d'admission (52a) du conduit d'admission d'air (52) est positionné sur un axe dans le sens de la largeur du véhicule (C1) du véhicule,
la partie de fixation (62) a une forme en section transversale qui s'étend en ligne droite dans une direction inclinée vers l'arrière par rapport au sens de la largeur du véhicule, et
la partie de fixation (62) est positionnée sur l'axe dans le sens de la largeur du véhicule (C1).

2. Véhicule à selle selon la revendication 1, où au niveau d'une zone, sur un côté en aval de la partie de fixation (62) par rapport à une direction d'écoulement de l'air, dans la partie avant de conduit (56), une partie rétrécie (64) ayant une zone de passage d'écoulement diminuant graduellement est formée.

3. Véhicule à selle selon la revendication 2, où la partie rétrécie (64) a une surface inférieure formée avec un orifice d'écoulement d'eau (66).

4. Véhicule à selle selon la revendication 2 ou 3, où une partie d'une paroi de la partie avant de conduit (56) est évidée vers l'intérieur d'un passage d'admission d'air pour ainsi former la partie rétrécie (64).

5. Véhicule à selle selon la revendication 4, qui comprend en outre une paire de phares gauche et droit (36), par rapport à la direction de déplacement du véhicule, où
l'orifice d'admission (52a) du conduit d'admission d'air (52) est positionné au-dessus des phares (36) et entre les phares gauche et droit (36), et
une paroi avant (36f) de la partie avant de conduit (56) a une partie évidée pour former la partie rétrécie (64).

6. Véhicule à selle selon l'une quelconque des revendications 1 à 5, où la partie arrière de conduit (60) est reliée par fluide au filtre à air (25) par une ouverture (14) définie dans un des châssis principaux (1).

7. Véhicule à selle selon la revendication 6, où la partie intermédiaire de conduit (56) a une forme en section transversale qui est rectangulaire allongée dans une direction verticale, et un orifice de sortie (25b) dans la partie arrière de conduit (60) a une forme en section transversale qui est ronde.

8. Véhicule à selle selon la revendication 6 ou 7, où
chacun des châssis principaux gauche et droit (1) comprend: une partie avant de châssis (6) qui, lorsqu'elle est vue dans un plan, s'évase latéralement vers l'extérieur dans le sens de la largeur du véhicule vers une direction vers l'arrière, par rapport à la direction de déplacement du véhicule, à partir de la tubulure de refoulement (4) ; une partie intermédiaire de châssis (8) s'étendant dans une direction vers l'arrière, par rapport à la direction de déplacement du véhicule, à partir de la partie avant du châssis (6) et une partie arrière du châssis (10) positionnée vers l'arrière, par rapport à la direction de déplacement du véhicule, de la partie intermédiaire du châssis (8), les parties intermédiaires du châssis gauche et droite (8) des châssis principaux gauche et droit (1) s'étendant parallèles l'un à l'autre, et
la partie arrière de conduit (60) dans un des châssis principaux (1) est reliée par fluide au filtre à air (25) après être passée à travers l'ouverture (14), formée dans la partie avant du châssis (6) ou dans la partie intermédiaire du châssis (8), dans une direction allant de l'extérieur latéral du sens de la largeur du véhicule vers un côté intérieur de celui-ci.

9. Véhicule à selle selon l'une quelconque des revendications 1 à 8, comprenant en outre un capot latéral (32) configuré pour recouvrir une partie avant d'un corps de véhicule à partir d'un côté, où
le conduit d'admission d'air (52) est recouvert par le capot avant (30) et les capots latéraux (32) de l'extérieur du sens de la largeur du véhicule.

10. Véhicule à selle selon la revendication 9, où le conduit d'admission d'air (52) est d'une structure à deux composants qui est divisée en moitiés de conduit gauche et droite (53), par rapport à la direction de déplacement du véhicule.
